# EUROPÄISCHE PATENTANMELDUNG

(11) **EP 1 254 971 A2**
(43) Veröffentlichungstag der Anmeldung: **06.11.2002**
(21) Anmeldenummer: 02004711.4
(22) Anmeldetag: 01.03.2002
(51) Int. Cl.: C23C 16/50

(54) **Verfahren zum Vorbehandeln von Feststoffmaterial**

(30) Priorität: 02.05.2001 DE 10121367
(71) Anmelder: Plasma Treat GmbH, 33803 Steinhagen (DE)
(72) Erfinder: Förnsel, Peter, 32139 Spenge (DE); Hartmann, Uwe, 32805 Horn-Bad Meinberg (DE)
(74) Vertreter: TER MEER STEINMEISTER & PARTNER GbR

(57) **Zusammenfassung**

Verfahren zum Vorbehandeln von porösem Material (10) mittels elektrischer Entladung, dadurch gekennzeichnet, daß das Material (10) vor der Vorbehandlung in einer Kammer (20) mit einem leicht ionisierbaren Gas imprägniert wird.

## Beschreibung

Die Erfindung betrifft ein Verfahren zum Vorbehandeln von porösem Material mittels elektrischer Energie.

Es ist bekannt, die Oberflächen von Materialien, auf die Flüssigkeiten wie Lacke, Klebstoff oder dergleichen aufgetragen werden sollen, mit Hilfe einer elektrischen Entladung vorzubehandeln, um die Oberflächen für die Flüssigkeit benetzbar zu machen. In einigen Fällen erfolgt die Vorbehandlung mit Hilfe einer Korona-Entladung zwischen zwei stabförmigen Elektroden, die beide mit einem Dielektrikum beschichtet sind und zwischen denen das vorzubehandelde Material hindurchläuft. Weiterhin ist es bekannt, die Korona-Vorbehandlungstrecke zusätzlich zu begasen. Bei anderen Vorbehadlungsverfahren werden die Entladungen und/oder ein die Vorbehandlung bewirkendes Plasma durch Mikrowellenstrahlung induziert.

Wenn poröse Materialien, beispielsweise Vliese oder lose geschüttetes körniges Material, in dieser Weise vorbehandelt werden sollen, erhält man jedoch einen Vorbehandlungseffekt lediglich an der Oberfläche, da die elektrische Entladung nicht in die Poren des Materials eindringt. Falls solche porösen Materialien mit einer Flüssigkeit getränkt werden sollen, wie es beispielsweise bei der Herstellung von Vliesen für elektrische Batterien der Fall ist, wäre es erwünscht, wenn auch die Innenflächen der Poren tief im Inneren des Materials hydrophil gemacht werden könnten, so daß das Material sich besser mit der Flüssigkeit tränken läßt.

Aufgabe der Erfindung ist es deshalb, ein Verfahren anzugeben, das eine tiefreichende Vorbehandlung von Materialien, insbesondere porösem Materialien, mittels elektrischer Entladung ermöglicht.

Diese Aufgabe wird erfindungsgemäß dadurch gelöst, daß das vorzubehandelnde poröse Material vor dem Durchlauf durch die Vorbehandlungszone mit einem leicht ionisierbaren Gas oder dem Dampf einer Flüssigkeit imprägniert wird.

Wenn das Material in die Vorbehandlungszone eintritt, in der die elektrische Entladung stattfindet, sind die Poren des Materials bereits mit dem leicht ionisierbaren Gas gefüllt, und bei der Vorbehandlung mittels elektrischer Entladung oder Mikrowellen wird dieses Gas ionisiert und es bewirkt, daß das erzeugte Plasma tief in die Poren eindringt und dort seine Wirkung entfaltet. Auf diese Weise wird eine wirksame und tiefreichende Vorbehandlung des porösen Materials erreicht.

Vorteilhafte Ausgestaltungen der Erfindung ergeben sich aus den Unteransprüchen.

In einer besonders bevorzugten Ausführungsform wird das vorzubehandelnde Material mit einem Gasgemisch behandelt, das neben dem leicht ionisierbaren Gas, beispielsweise Argon, auch Wasserdampf oder den Dampf einer anderen Flüssigkeit enthält, in der das leicht ionisierbare Gas löslich ist. Der Dampf schlägt sich dann an der Oberfläche des vorzubehandelnden Materials - bei porösen Materialien auch an den Innenflächen der Poren - nieder und bildet dort einen Flüssigkeitsfilm, in dem sich das leicht ionisierbare Gas bereitwillig löst. Durch die bei der Vorbehandlung entstehende Wärmeenergie wird der dünne Flüssigkeitsfilm wieder verdampft, während das Gas auf der Oberfläche zurückbleibt. Auf diese Weise wird das leicht ionisierbare Gas unmittelbar mit der Materialoberfläche in Kontakt gebracht, so daß eine besonders wirksame Vorbehandlung erzielt wird. Diese Verfahrensvariante ist deshalb nicht nur bei porösen Materialien, sondern auch bei Materialien mit glatter Oberfläche von Vorteil.

In Versuchen hat sich überraschend gezeigt, daß auch eine Behandlung nur mit Dampf, insbesondere Wasserdampf, ohne Zusatz eines anderen gut ionisierbaren Gases, die Wirksamkeit der elektrischen Vorbehandlung deutlich steigert.

Im folgenden werden Ausführungsbeispiele der Erfindung anhand der Zeichnung näher erläutert.

### Es zeigt:

- Figur 1: einen schematischen Schnitt durch eine Vorrichtung zum Vorbehandeln von Batterievlies; und
- Figur 2: einen schematischen Schnitt durch eine Vorrichtung zum Vorbehandeln von Granulat.

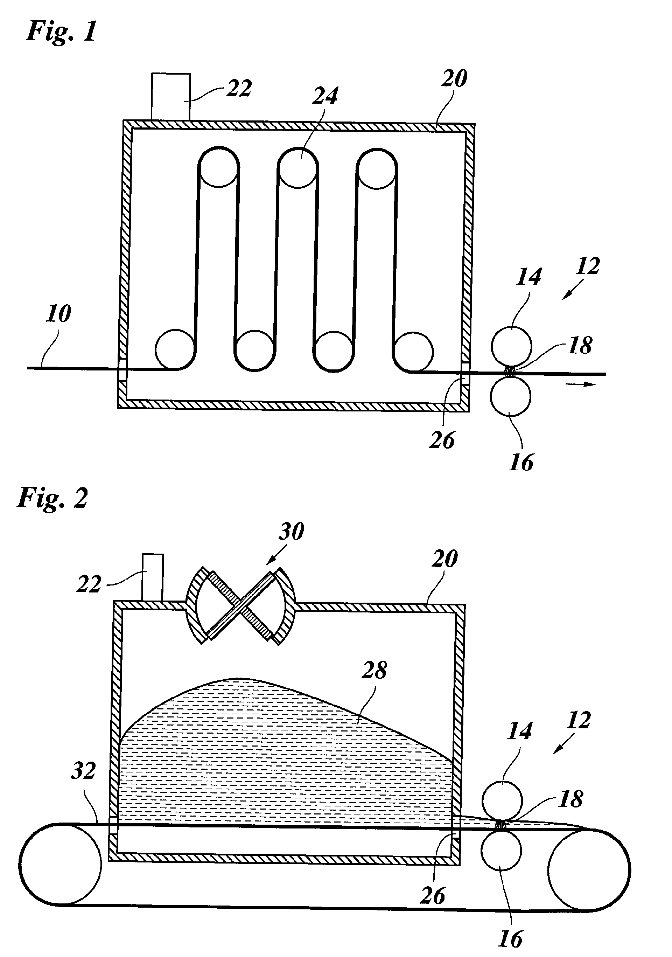

Die in Figur 1 gezeigte Vorrichtung dient zum Vorbehandeln eines Batterievlieses 10, das als Endlosmaterial durch eine Korona-Einrichtung 12 läuft, die in bekannter Weise durch zwei jeweils mit einem Dielektrikum beschichtete stabförmige Elektroden 14, 16 gebildet wird, zwischen denen mit Hilfe eines nicht gezeigten Hochfrequenzgenerators eine hohe elektrische Spannung erzeugt wird, so daß eine Koronaendladung 18 zwischen den Elektroden stattfindet. Das in den Entladungsfunken entstehende Plasma wirkt chemisch und physikalisch auf die Oberfläche des zu behandelnden Materials ein und verändert dessen Oberflächenstruktur so, daß die Oberfläche leichter mit Flüssigkeiten benetzbar wird.

Der Koronaeinrichtung 12 ist in Laufrichtung des Batterievlieses 10 eine Inpregniervorrichtung in der Form einer Kammer 20 vorgeschaltet, die von dem Batterievlies 10 durchlaufen wird und in die über einen Gaseinlaß 22 Argon eingeleitet wird. Innerhalb der Kammer 20 läuft das Batterievlies 10 mäanderförmig über mehrere Umlenkrollen 24, so daß die Verweildauer des Batterievlieses in der Kammer erhöht wird. Wenn das Batterievlies unter Zugspannung steht, haben die Umlenkrollen 24 zugleich den Effekt, das Batterievlies 10, während es durch die Umlenkrollen umgelenkt wird, vorübergehend zu verdichten und so die in den Poren des Vlieses vorhandene Luft auszupressen. Wenn sich das Material nach dem Verlassen der Umlenkrolle wieder aufweitet, werden die Poren mit Argon gefüllt.

Wenn das Batterievlies 10 die Kammer 20 durch eine Austrittsöffnung 26 verläßt, sind deshalb die Poren des Vlieses mit Argon gefüllt, d. h., das Vlies ist mit Argon imprägniert. Das kontinuierlich über den Gaseinlaß 22 zugeführte Argon tritt ebenfalls durch die Austrittsöffnung 26 aus und kann zugleich zur Begasung der Entladungsstrecke dienen. Die mit Argon gefüllten Poren des Batterievlieses 10 weisen für die Entladungsbüschel der Korona-Entladung 18 eine wesentlich höhere Leitfähigkeit auf als mit Luft gefüllte Poren. Hierdurch wird erreicht, daß die Koronaentladung tiefer in das poröse Batterievlies eindringt und einen Vorbehandlungseffekt auch an den Innenflächen der Poren im Inneren des Vlieses hervorruft.

Figur 2 zeigt eine Vorrichtung, mit der nach einem analogen Verfahren ein lose geschüttetes körniges Material 28, beispielsweise Kunststoffgranulat, vorbehandelt werden kann. Das körnige Material 28 wird in diesem Fall über eine Zellenradschleuse 30 in die Kammer 20 eingegeben und fällt innerhalb der Begasungskammer auf ein Förderband 32, das durch die Kammer hindurchläuft. Die Auslaßöffnung 26 der Kammer dient zugleich zum Abrakeln des Materials 28 auf dem Förderband 32, so daß das Förderband 32, wenn es zwischen den Elektroden 14, 16 hindurchläuft, eine annähernd gleichmäßig dicke Schicht des Materials 28 trägt. Da die Poren zwischen den Granulatpartikeln mit Argon gefüllt sind, kann auch hier die Koronaentladung 18 tief in das Material eindringen.

Bei einer abgewandelten Ausführungsform wird in die Kammer 20 anstelle des Argongases ein Gemisch aus Wasserdampf und Argon oder reiner Wasserdampf zugeführt. Dieses Gasgemisch dringt tief in die Poren des Materials ein, und der Dampf schlägt sich als dünner Flüssigkeitsfilm auf der Oberfläche nieder. Da Argon sehr gut in Wasser löslich ist, wird das Argon unmittelbar an die Materialoberfläche herangebracht. Wenn dann der Wasserfilm durch die Korona-Entladung 18 wieder verdampft wird, erhält man in den Poren in den unmittelbar an die Porenwände angrenzenden Bereichen eine deutlich höhere Argonkonzentration als im Rest des Porenvolumens. Diese Verteilung des Argons und der verdampfende Wasserfilm sind für eine wirksame Vorbehandlung besonderes günstig.

## Patentansprüche

1. Verfahren zum Vorbehandeln von porösem Material (10; 28) mittels elektrischer Energie, **dadurch gekennzeichnet, daß** das Material (10; 28) vor der Vorbehandlung mit einem leicht ionisierbaren Gas imprägniert wird.

2. Verfahren zum Vorbehandeln von Material (10; 28) mittels elektrischer Energie, **dadurch gekennzeichnet, daß** das Material (10; 28) vor der Vorbehandlung mit einem Dampf einer Flüssigkeit behandelt wird.

3. Verfahren zum Vorbehandeln von Material (10; 28) mittels elektrischer Energie, **dadurch gekennzeichnet, daß** das Material (10; 28) vor der Vorbehandlung mit einem Gasgemisch behandelt wird, das ein leicht ionisierbares Gas sowie den Dampf einer Flüssigkeit enthält, in der das leicht ionisierbare Gas löslich ist.

4. Verfahren nach Anspruch 1 oder 2, **dadurch gekennzeichnet, daß** der Dampf Wasserdampf ist.

5. Verfahren nach Anspruch 1, 3 oder 4, **dadurch gekennzeichnet, daß** das leicht ionisierbare Gas Argon ist.

6. Verfahren nach nach einem der vorstehenden Ansprüche, **dadurch gekennzeichnet, daß** die Vorbehandlung durch eine Koronaentladung (18) erfolgt.

7. Verfahren nach einem der vorstehenden Ansprüche, **dadurch gekennzeichnet, daß** das vorzubehandelnde Material (10; 28) eine Impregniervorrichtung (20) durchläuft.

8. Verfahren nach einem der vorstehenden Ansprüche, **dadurch gekennzeichnet, daß** das vorzubehandelnde Material ein Vlies (10) ist.

9. Verfahren nach den Ansprüchen 7 und 8, **dadurch gekennzeichnet, daß** das Vlies (10) als Endlosmaterial mäanderförmig durch die Impregniervorrichtung (20) läuft.

10. Verfahren nach Anspruch 8 oder 9, **dadurch gekennzeichnet, daß** das Vlies (10) beim Impregnieren vorübergehend verdichtet wird.

11. Verfahren nach einem der Ansprüche 1 bis 7, **dadurch gekennzeichnet, daß** das vorzubehandelnde Material (28) ein körniges Material ist.
